(19) Europäisches Patentamt
European Patent Office
Office européen des brevets

(11) **EP 3 729 343 B1**

(12) **EUROPEAN PATENT SPECIFICATION**

(45) Date of publication and mention
of the grant of the patent:
**29.05.2024  Bulletin 2024/22**

(21) Application number: **18891029.3**

(22) Date of filing: **19.12.2018**

(51) International Patent Classification (IPC):
***G05B 23/02*** *(2006.01)*

(52) Cooperative Patent Classification (CPC):
**G05B 23/024; G05B 23/0272;** G06F 2218/00

(86) International application number:
**PCT/US2018/066479**

(87) International publication number:
**WO 2019/126309 (27.06.2019 Gazette 2019/26)**

(54) **AUTOMATED DETECTION OF ANOMALOUS INDUSTRIAL PROCESS OPERATION**

AUTOMATISCHE ERKENNUNG ANOMALER INDUSTRIELLER PROZESSABLÄUFE

DÉTECTION AUTOMATISÉE D'UNE ANOMALIE DE FONCTIONNEMENT DANS UN PROCESSUS INDUSTRIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **22.12.2017   US 201715852809**

(43) Date of publication of application:
**28.10.2020   Bulletin 2020/44**

(73) Proprietor: **AVEVA Software, LLC
Lake Forest, CA 92630 (US)**

(72) Inventors:
• **ERICKSON, Brian, Kenneth
Long Beach, California 90815 (US)**
• **KAMATH, Vinay, T.
Rancho Santa Margarita, California 92688 (US)**
• **MANUSHREE, Abhijit
Laguna Niguel, California 92677 (US)**
• **CLINTON, Greg, C.
Mission Viejo, California 92692 (US)**
• **CARON, Sébastien
Montreal, Québec H1T 2N8 (CA)**

(74) Representative: **WBH Wachenhausen
Patentanwälte PartG mbB
Müllerstraße 40
80469 München (DE)**

(56) References cited:
**WO-A1-2017/055073      US-A1- 2009 128 694
US-A1- 2011 119 374      US-A1- 2013 307 880
US-A1- 2015 205 690      US-A1- 2016 328 432**

**Description**

TECHNICAL FIELD

Aspects of the present disclosure generally relate of the fields of networked computerized industrial control automation systems and networked computerized systems utilized to monitor, log, and display relevant manufacturing/production events and associated data, and supervisory level control and manufacturing information systems. More particularly, aspects of the present disclosure relate to systems and methods for automated detection of anomalous operation of industrial process equipment by entropy scaling.

BACKGROUND

Typical industrial processes are extremely complex and receive substantially greater volumes of information than any human could possibly digest in its raw form. By way of example, it is not unheard of to have thousands of sensors and control elements (e.g., valve actuators) monitoring/controlling aspects of a multi-stage process within an industrial plant. These sensors are of varied type and report on varied characteristics of the process. Their outputs are similarly varied in the meaning of their measurements, in the amount of data sent for each measurement, and in the frequency of their measurements. As regards the latter, for accuracy and to enable quick response, some of these sensors/control elements take one or more measurements every second. Multiplying a single sensor/control element by thousands of sensors/control elements (a typical industrial control environment) results in an overwhelming volume of data flowing into the manufacturing information and process control system. US 2015205690 A1 relates to a computer monitoring system that may predict near term and long term performance by comparing a segment of current time series data with previously observed time series to find matching segments. WO 2017055073 A1 relates to a number of methods and apparatuses in the area of predictive maintenance, including a method of applying transfer entropy techniques to lithographic apparatuses to find a causal link between parameters.
Distributing the entire volume of data from all user devices overburdens communications networks and unnecessarily utilizes network resources by sending data irrelevant to users associated with one or more user devices. Prior techniques statistically analyze the data to identify information regarding the industrial process that is of interest to one or more users. Conventional entropy techniques require prior knowledge about the scale of the data values before performing the entropy calculations. Disadvantageously, if the data values drift and/or change scale, then the conventional entropies cannot be compared.

SUMMARY

Aspects of the disclosure detect anomalous operation of equipment in an industrial process and generate reports of the anomalous operation for transmission to particular user devices via a communications network. A reporting architecture utilizes scaled entropy calculations that enable comparing signal entropies across a plurality of time periods without prior knowledge of the scale of the signal.
A system embodying aspects of the disclosure includes a processor, a computer-readable storage device, a report database, and a reporting service. The reporting service comprises processor-executable instructions stored on the computer- readable storage device that, when executed by the processor, configure the reporting service to detect operational changes in an industrial process. The reporting service receives time-series data. The time-series data is associated with a process control system and represents one or more values of a process control tag of the process control system over an interval of time. Exemplary and non-limiting process control tags include physical properties of valves, sensors, pumps, tanks, and the like within the continuous process. The reporting service apportions the retrieved time-series data into a plurality of sub-intervals of the interval of time. Each sub-interval includes a predetermined number of individual data values sampled from the time-series data. The reporting service further determines the minimum data value and the maximum data value of the individual data values of each subinterval and executes an entropy calculation of the individual data values of each subinterval. The entropy of each sub-interval is scaled based on the determined minimum and maximum data values of the sub-interval. In an embodiment, the entropy is scaled based on the difference between the maximum and minimum values (i.e., the range). The reporting service detects that one or more sub-intervals are anomalous relative to an expected value by performing a statistical analysis on the scaled entropy value for each sub-interval. The reporting service further publishes at least one report indicative of the detected anomalous subintervals into the report database.
In other aspects, a computer implemented method and a computer readable storage device are provided.
Other objects and features will be in part apparent and in part pointed out hereinafter.

BRIEF DESCRIPTION OF THE DRAWINGS

FIG. 1 illustrates an operational historian data pattern detection and communication services system according to an embodiment.

FIG. 2 illustrates a reporting service of the operational historian data pattern detection and communication services system of FIG. 1.

FIG. 3 is an exemplary flow diagram illustrating a scaled entropy anomaly detection process of the reporting service of FIG. 2.

FIG. 4A illustrates an exemplary flow profile of a water meter in an industrial process that meters water over a period of days according to an embodiment.

FIGS. 4B and 4C illustrate histograms for the exemplary flow profile of FIG. 4A.

FIGS. 5, 6, 7, 8, and 9 illustrate exemplary reports displayed by a graphical user interface according to an embodiment.

FIG. 10 illustrates an exemplary architecture of a computing device programmed to provide aspects of the operational historian data pattern detection and communication services system of FIG. 1.

FIG. 11 illustrates an exemplary industrial process system within which aspects of the disclosure may be incorporated.

Corresponding reference characters indicate corresponding parts throughout the drawings.

DETAILED DESCRIPTION

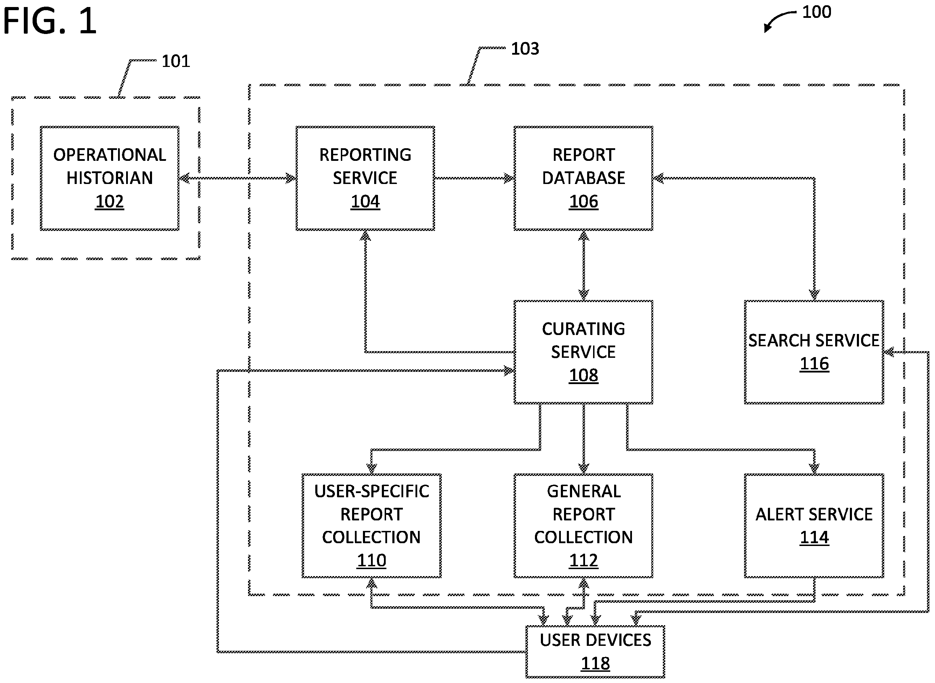

Referring to FIG. 1, an operational historian data pattern detection and communication services system, generally indicated at 100, analyzes data stored in an operational historian and transforms that data into timely reports that are communicated to appropriate devices at appropriate times and manners. In this manner, aspects of the system 100 filters (e.g., curates) the data in order to raise visibility of the data to users (e.g., via user devices) without overwhelming them and/or overburdening communications networks. Aspects of the disclosure detect anomalous operation of equipment in an industrial process and generate reports of the anomalous operation for transmission to particular user devices via a communications network. A reporting architecture described below utilizes scaled entropy calculations that enable comparing signal entropies across a plurality of time periods without prior knowledge of the scale of the signal. As shown in FIG. 1, the system 100 includes an operational historian device 101 embodying an operational historian 102, a reporting service 104, a report database 106, a curating service 108, a user specific report collection 110, a general report collection 112, an alert service 114, and a search service 116. In an embodiment, system 100 provides a historian news feed of generated reports (i.e., stories) for users based on data provided by an operational historian and/or other providers.

In an embodiment, the operational historian 102 is adapted to store (e.g., "historize") various types of data related to an industrial process. Exemplary data includes, but is not limited to, time-series data, metadata, event data, configuration data, raw timeseries binary data, tag metadata, diagnostic log data, and the like. The operational historian 102 is also adapted to record trends and historical information about the industrial process for future reference. An exemplary operational historian 102 stores data about various aspects of an industrial process in quantities that humans cannot interpret or analyze. For example, an operational historian may receive two million or more data values (e.g., tags relating to process control components, process variables, etc.) every second. In an embodiment, historian 102 comprises processor-executable instructions embodied on a storage memory device (e.g., as part of a server computing device) to provide the operational historian 102 via a software environment. An exemplary operational historian 102 includes Wonderware® Historian and Wonderware® Online provided by Schneider Electric.

The reporting service 104 illustrated by FIG. 1 is adapted to retrieve data from operational historian 102, detect anomalies in time intervals during which the retrieved data was generated, generate reports that include information about the detected anomalies, and store the generated reports in the report repository, such as a database 106. In an embodiment, reporting service 104 comprises processor-executable instructions embodied on a storage memory device to provide reporting service 104 via a software environment. For example, reporting service 104 may be provided as processor-executable instructions that comprise a procedure, a function, a routine, a method, and/or a subprogram utilized independently or in conjunction with additional aspects of system 100 by computing device 103 according to an exemplary embodiment of the disclosure. Further details of reporting service 104 are provided herein.

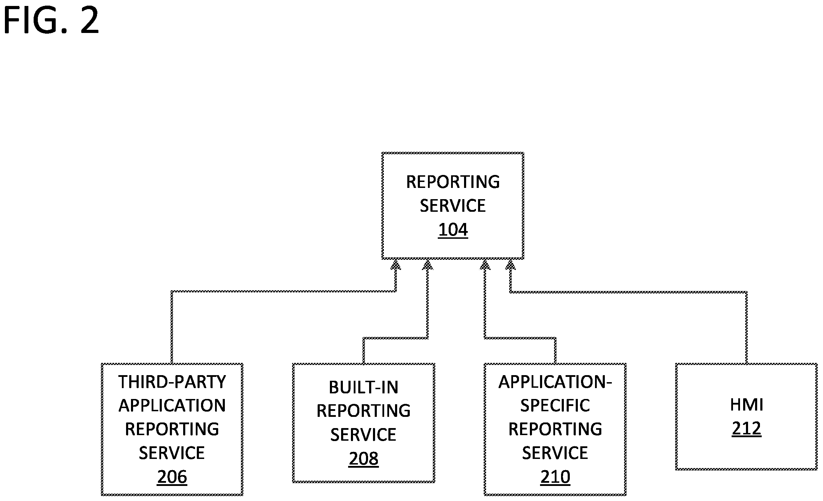

In an embodiment, reporting service 104 is adapted to retrieve data from operational historian 102 by transmitting a query to operational historian 102, which operational historian 102 receives and uses to select stored data that matches the query. The operational historian 102 then transmits the selected data to reporting service 104. The reporting service 104 may retrieve data continuously or at regular intervals. In the embodiment illustrated by FIG. 2, reporting service 104 retrieves and/or receives data from additional sources, including external third-party reporting applications 206 (e.g., via an Application Programming Interface (API) of reporting service 104), built-in reporting services 208 (e.g., Wonderware®

Online built-in reporters), application specific reporting services based on a client application configuration 210, and a Human Machine Interface (HMI) 212. It will be understood by one having skill in the art that additional reporting entities may be utilized to extend the capability of reporting service 104. For example, a framework for adding additional reporting services 104 gives aspects of the disclosure extensibility and "verticals" readiness.

Referring again to the embodiment of FIG. 1, reporting service 104 is adapted to analyze the data using algorithms and to detect certain patterns (e.g., "pattern of interest") and/or non-conformities (e.g., anomalies) in the data. Exemplary algorithms include statistical algorithms, machine learning algorithms, rules-based algorithms, and the like. Upon detecting certain patterns and/or anomalies, reporting service 104 generates reports about the time intervals during which these detected patterns and/or anomalies occurred. In an exemplary embodiment, a report includes normal data, abnormal data, a textual description of an anomaly, graphics (e.g., graphs, images, etc.), metadata, and the like. The reports may include the information about the detected patterns in a format that is amenable to the curating service 108 and/or a format that is human-understandable when displayed via a display device and/or a Human Machine Interface device. In this manner, reporting service 104 transforms the data from a format that is unintelligible to curating service 108 and humans into a format that is intelligible to curating service 108 and humans when displayed via a device.

After generating the reports, reporting service 104 transmits the reports to the report database 106 for storage. The reporting service 104 is configurable to transmit the reports to report database 106 via an HTML interface, a REST interface, an ODATA interface, and similar interfaces. In an embodiment, system 100 includes a plurality of reporting services 104 that each retrieve data from operational historian 102, detect patterns in the data, generate reports, and store the reports in report database 106. In an embodiment that utilizes a plurality of reporting services, each reporting service may operate independently or the collective operating services may operate in parallel on portions of a larger reporting task.

Still referring to FIG. 1, report database 106 is adapted to store reports as an organized collection of data. In this manner, report database 106 stores the reports in a central location for access by various systems and devices.

The curating service 108 is adapted to intelligently review reports stored in database 106, rank and/or classify reviewed reports, and route (e.g., distribute) ranked reports to collections, devices, other services, and the like. In an embodiment, curating service 108 moderates reports and raises their visibility to users at a certain frequency and in a certain manner such that users will not be overwhelmed with data, but instead will be provided with useful information in the reports at times and manners that are most appropriate for each specific user or groups of users. For example, for each user, curating service 108 determines whether a particular report should appear on a primary/front page of a feed for that user, on a secondary page for that user, or just be archived in a searchable format for that user. By distributing relevant reports to certain user devices, curating service 108 reduces the burden on communications networks. The curating service 108 is configurable to take additional actions based on the relevance of a particular report for a particular user, such as beep or alert a user device 118 of the user, as further described herein. In another embodiment, curating service 108 functions as a filter to determine which of the multitude of reports in report database 106 are transmitted to certain users and at which times those reports are transmitted.

In an embodiment, curating service 108 comprises processor-executable instructions embodied on a storage memory device to provide curating service 108 via a software environment. For example, curating service 108 is embodied by processor executable instructions that comprise a procedure, a function, a routine, a method, and/or a subprogram utilized independently or in conjunction with additional aspects of system 100 by computing device 103 according to an exemplary embodiment of the disclosure. Further details regarding curating service 108 are provided, for example, in U.S. Patent Application Ser. No. 15/270,898.

Still referring to FIG. 1, the user-specific report collection 110 is adapted to receive reports from curating service 108 and organize the reports into lists (e.g., feeds) that are kept current and made available to users and/or groups of users via user devices 118. For example, user-specific report collection 110 may be a database, according to an aspect of the disclosure. In an embodiment, user-specific report collection 110 provides feeds that indicate new reports that have not yet been accessed by user devices 118 and/or reports that have not been displayed by user devices 118. The general report collection 112 is adapted to receive reports from curating service 108 and present them in a manner such that they may be browsed through via user devices 118. For example, general report collection 112 may be a database, according to an aspect of the disclosure. In exemplary embodiment, general report collection 112 organizes reports in such a way to support navigation of the reports via user devices 118. In another exemplary embodiment, general report collection 112 organizes reports such that reports having higher general relevance to an industrial process than other reports are stored in a manner such that those reports are displayed in more prominent positions when accessed and displayed via user devices 118.

Referring again to FIG. 1, alert service 114 is adapted to receive reports from curating service 108 and deliver received reports to user devices 118 in real-time. For example, alert service 114 may deliver reports to user devices 118 in the form of emails, text messages, mobile device notifications (e.g., user interface notification), pager notification, and the like. In an embodiment, alert service 114 comprises processor executable instructions embodied on a storage memory device to provide alert service 114 via a software environment. For example, alert service 114 may be provided as processor executable instructions that comprise a procedure, a function, a routine, a method, and/or a subprogram utilized independently or in conjunction with additional aspects of system 100 by computing device 103 according to an exemplary embodiment of the disclosure. Further details of alert service 114 are provided herein. In an embodiment, alerts from alert service 114 are more important than reports.

The search service 116 of FIG. 1 is adapted to allow reports stored in database 106 to be searched via user devices 118. In an exemplary embodiment, search service 116 is adapted to search database 106 for reports containing certain content. In another embodiment, search service 116 is adapted to search database 106 for reports by relation to historian entities involved in the reports. In an embodiment, search service 116 comprises processor-executable instructions embodied on a storage memory device to provide search service 116 via a software environment. For example, search service 116 may be provided as processor-executable instructions that comprise a procedure, a function, a routine, a method, and/or a subprogram utilized independently or in conjunction with additional aspects of system 100 by computing device 103 according to an exemplary embodiment of the disclosure. Further details of search service 116 are provided herein.

The user devices 118 of FIG. 1 are adapted to receive from and transmit data to user-specific report collection 110, general report collection 112, alert service 114, and/or search service 116. In an embodiment, user devices 118 are also adapted to provide feedback on usage characteristics of the user devices 118 to curating service 108. Exemplary user devices 118 include, but are not limited to, personal computers, laptops, tablet computers, mobile communication devices, smartphones, and the like.

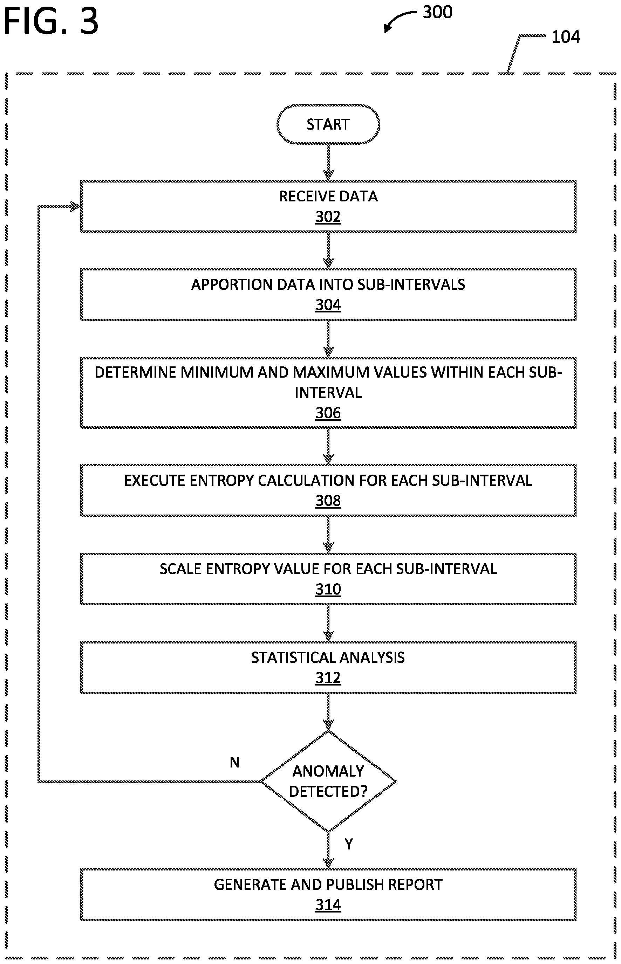

FIG. 3 illustrates a scaled entropy anomaly detection process 300 performed by reporting service 104. Entropy indicates a state of a signal (e.g., a plurality of time-series data values) representative of an attribute of an industrial process. Exemplary and non-limiting attributes include physical properties of assets such as valves, sensors, pumps, tanks, and the like within the industrial process. When the entropy of a signal changes, it may be desirable to inform a user (e.g., plant operator, engineer, etc.) of this anomaly. However, conventional entropy techniques require defining bins (e.g., subintervals), which in turn requires knowing the scale of the signal ahead of time. Traditional entropy techniques cannot be compared if the signal drifts and/or changes scale. Advantageously, the scaled entropy anomaly detection process described herein scales the entropy calculations, which enables comparison of entropies across a plurality of time periods even if the scale or range of the signal changes. In an embodiment, the scaled entropy is paired with a generalized statistical check to determine if the signal is anomalous without human configuration or intervention.

Still referring to FIG. 3, the reporting service 104 receives data at 302. In an embodiment, receiving data at 302 includes the reporting service 104 retrieving data from operational historian 102. For example, reporting service 104 may generate a request, including a query, for data and transmit the request to operational historian 102. Upon receiving the request, operational historian 102 determines which stored data matches the query and transmits that data to reporting service 104, which receives that data to complete the retrieval step 302. In another embodiment, operational historian 102 transmits all newly stored data to reporting service 104 without a specific request or query from reporting service 104. In an embodiment, the data stored by operational historian 102 and retrieved (e.g., received) by reporting service 104 relates to process control tags associated with a process control system of an industrial process. In another embodiment, receiving data at 302 includes the reporting service 104 receiving a stream (e.g., a live channel) of data via a communications network. For example, reporting service 104 may receive data directly from process control devices, as further described herein, without passing through operational historian 102.

At 304, reporting service 104 apportions, or divides, the retrieved data into sub-intervals that each includes a predetermined number of sampled data values (e.g., "points"). In an embodiment, reporting service 104 apportions the data into sub-intervals that includes data points. The sub-intervals may be referred to as bins, segments, and/or windows in accordance with one or more aspects of the present disclosure. In accordance with an aspect of the disclosure, the number of sub-intervals is big enough to resolve small changes in data patterns and small enough so that "clumping" occurs where multiple values map to the same sub-interval. In an embodiment, the number of sub-intervals is a number that is easy for users to visualize when the entropy number is projected onto a histogram. An exemplary and non-limiting number of sub-intervals is 100, which is an acceptable number for charting that allows the data to be visualized as percentages and histogram bins can be mapped at each integer percentage of the range of the data from 0% to 100%. Moreover, utilizing 100 sub-intervals ensures clumping.

Entropy calculations become more reliable and precise with larger numbers of data points. However, as the number of data points increases, the number of cycles decreases and the delay before anomaly detection and reporting increases. In accordance with an aspect of the disclosure, the number of data points is large enough to supply meaningful entropy results and small enough to trigger anomalies with reasonable delay. An exemplary and non-limiting number of data points is 360, which aligns well with natural time periods. For example, samples of one second will have cycle periods of five minutes and samples of two seconds will have cycle periods often minutes. Moreover, samples of one minute will have cycle periods of six hours, or exactly four periods per day, so the intervals will fall nicely on boundaries of one day. Utilizing 360 data points (e.g., samples) with 100 sub-intervals, as explained above, results in an average of 3.6 values per sub-interval.

The reporting service 104 determines, at 306, the minimum and maximum data values within each sub-interval. In an embodiment, the difference between the minimum and maximum data values (e.g., maximum minus minimum) comprises a range of data values within a sub-interval. At 308, reporting service 104 calculates the entropy of the data values of each sub-interval utilizing standard entropy methods. In an embodiment, reporting service 104 calculates the entropy via Equation 1, where b is the base of the logarithm used

$$H(\%) = \qquad p(\%i)K\%i) = - \text{sr=i } P(\%D \log^* p(\%i) \qquad\qquad (i)$$

In Equation 1, H is the entropy of a discrete random variable X with possible values $\{xi,..., x_n\}$ and probability mass function P(X), I is the information content of X, which is itself a random variable, and b is the base of the logarithm used. Exemplary values of b include, but are not limited to, 2, Euler's number e, and 10.

The reporting service 104 scales the entropy value for each sub-interval at 310. In an embodiment, reporting service 104 scales the entropy value of each sub-interval by multiplying the entropy value by the range of data values (i.e., the distance between the minimum and maximum values) in that sub-interval (e.g., S = H * range(signal)). At 312, reporting service 104 performs a statistical analysis on the scaled entropy value of each sub-interval to determine if that sub-interval is anomalous. In an embodiment, the statistical analysis utilizes mean and standard deviations. In another embodiment, the statistical analysis comprises a "golden rule" analysis that analyzes the data for normal ranges and/or repeatable values. Other analyses within the scope of the present disclosure include, but are not limited to, statistical algorithms and/or machine learning algorithms to detect patterns and/or non-conformities with patterns in the data.

Upon detecting at least one anomalous sub-interval through the statistical analysis, reporting service 104 generates reports regarding the anomaly. In an embodiment, reporting service 104 generates reports about detected patterns and/or nonconformities with patterns in the data of the anomalous sub-interval. In another embodiment, reporting service 104 generates reports including identified information of interest to users of aspects of system 100. For example, the reports may include normal data, abnormal data, a textual description of the anomaly, graphics, metadata, multimedia items, and the like that facilitate conveying characteristics of detected patterns and/or nonconformities (e.g., anomalies, deviations, etc.) in the data to users via user devices 118 and/or facilitate organizing or indexing the reports for access by devices including user devices 118. The reporting service 104 transmits (e.g., publishes) generated reports to report database 106 at step 314. The report database 106 stores the reports for access by various devices or services, including curating service 108 and search service 116. In an embodiment, a processor executing the operations of FIG. 3 constitutes a special purpose computer for receiving process data for analysis, analyzing the process data via a scaled entropy technique, detecting one or more sub-intervals are anomalous to identify information of interest to one or more users, and publishing at least one report indicative of the tag values of the detected non-conforming sub-interval into a report database.

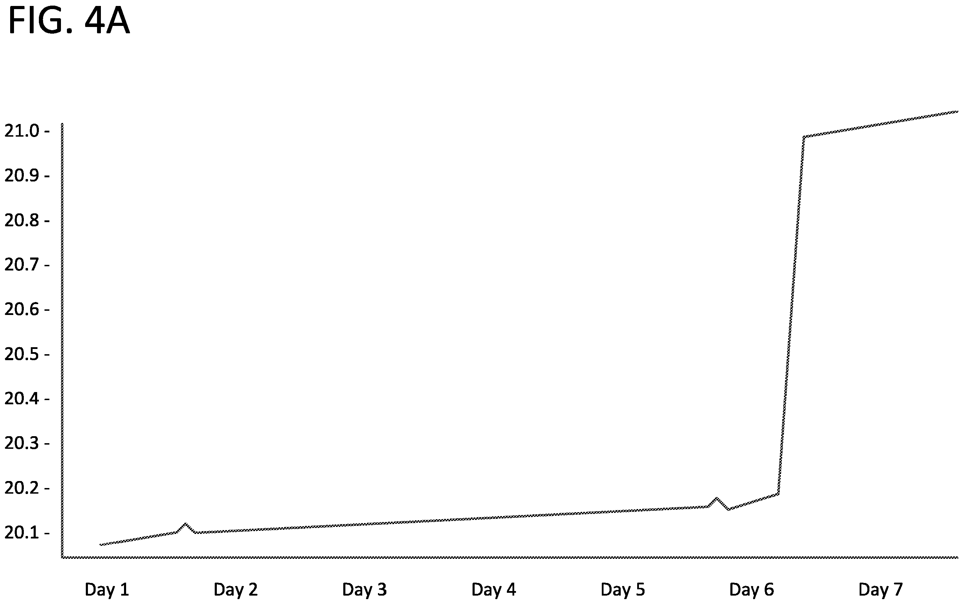

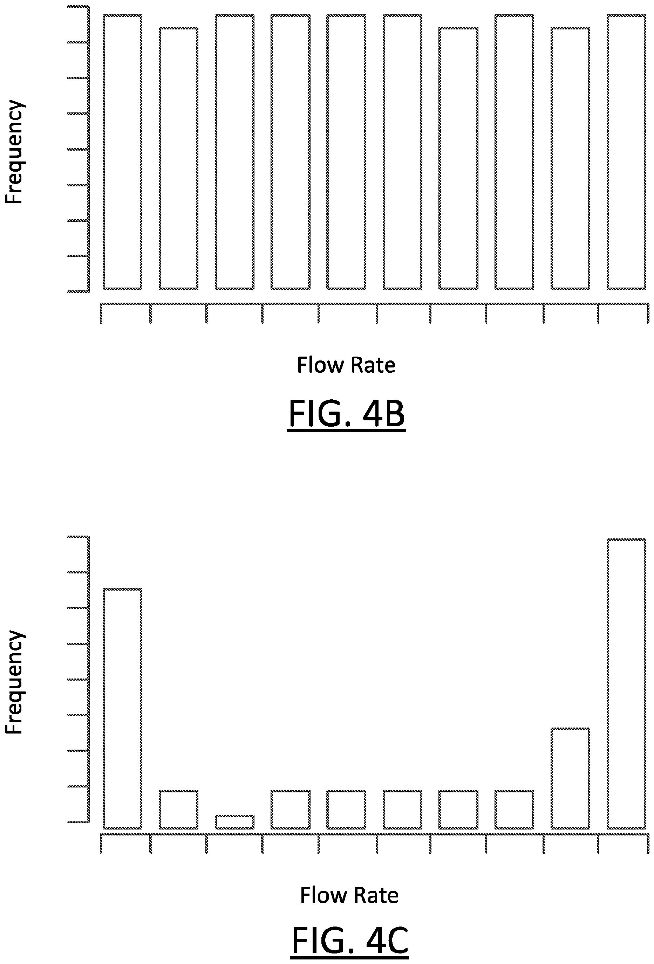

FIG. 4A illustrates an exemplary flow profile of a water meter in an industrial process that meters water over a period of days. As illustrated, the exemplary flow profile does not have a mean value because the total flow is always increasing. Thus, conventional techniques, such as using some number n standard deviations from the mean for the range, are disadvantageous because the data does not follow a normal distribution. The conventional techniques are unable to detect an anomaly for the increase in flow at Day 6. FIG. 4B illustrates a ten-bin histogram for the flow profile of FIG. 4A on Day 3, where the flow profile is more or less a diagonal line. The data that comprises the histogram in FIG. 4A has a high entropy value because it is approaching a uniform distribution. FIG. 4C illustrates a ten-bin histogram for the flow profile of FIG. 4A on Day 6. The data that comprises the histogram in FIG. 4B has a lower entropy even though there is more disorder in the system at this point (e.g., Day 6). This discrepancy is caused by using the count per bin and since the bins are larger more data occupies the same bin.

The scaled entropy anomaly detection process 300 performed by reporting service 104 described above overcomes the disadvantages of the conventional techniques. By determining the range of values within each bin and scaling the entropy by the range, the scaled entropy value will be much higher for the increase in flow at Day 6. Thus, higher disorder and larger spreads in the data result in higher entropy values in accordance with aspects of the present disclosure. Performing statistical analyses on the scaled entropy enables improved detection of unusual behaviors in an industrial process. Exemplary scenarios that the scaled entropy anomaly detection process 300 performed by reporting service 104 can detect include, but are not limited to, data that does not change range but increases or decreases entropy (e.g., changing from a normal distribution to a uniform distribution, changing from a square wave to a sine wave, etc.), data that drifts but the behavior changes (e.g., increasing or decreasing water usage as measured by a total flow meter, etc.), and data that changes ranges (e.g., changing from a small range to a large range, etc.).

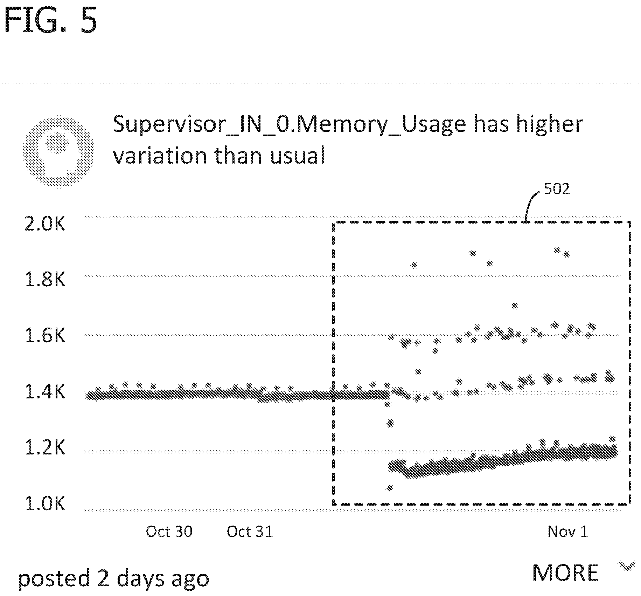

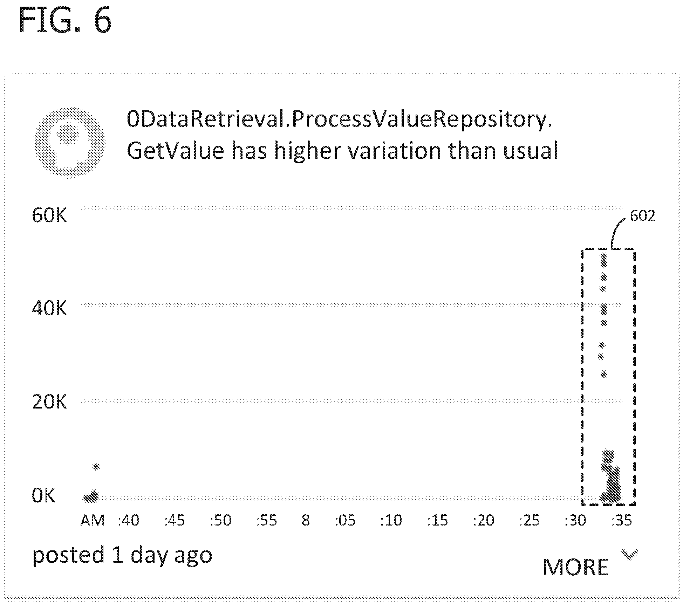

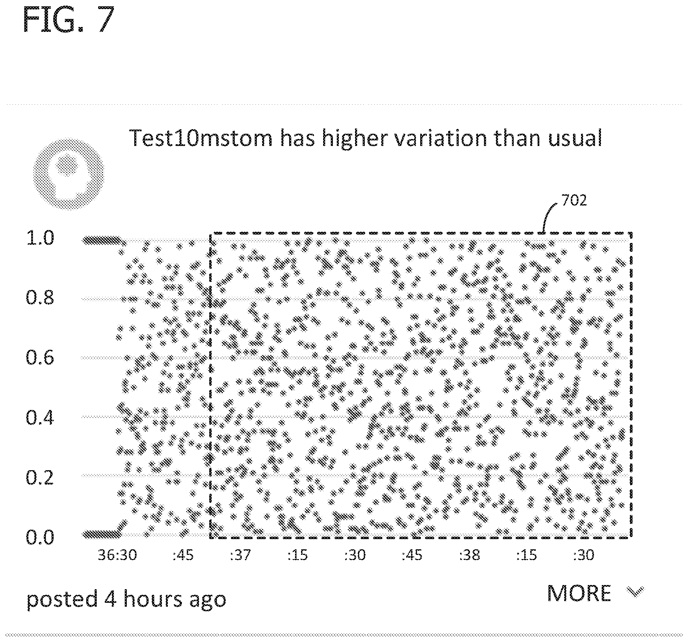

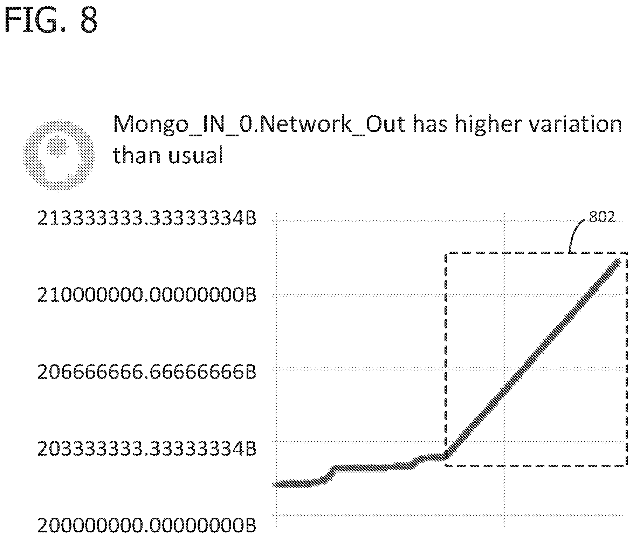

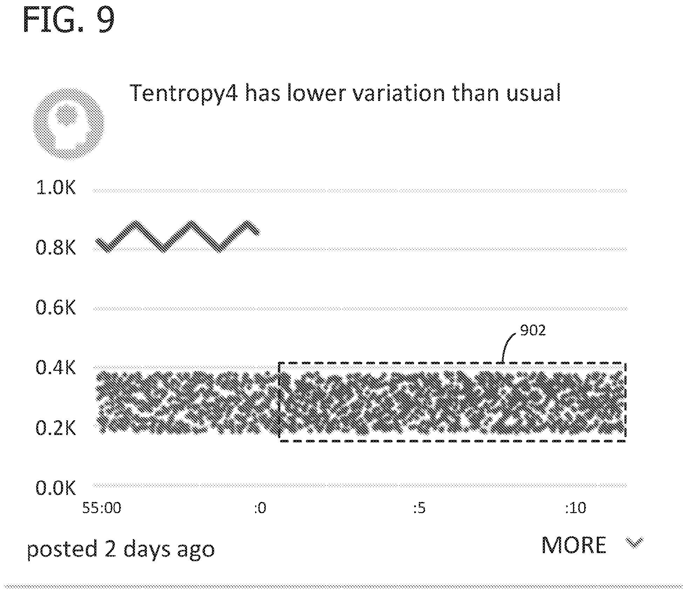

FIGS. 5-9 illustrate exemplary reports displayed by a graphical user interface of user devices 118. The exemplary display notifies user devices 118 of significant events related to an industrial process. In an embodiment, the user interface provides a status indicator when there are new reports available. Selecting the status indicator (e.g., clicking, tapping, etc.) via user devices 118 causes user devices 118 to display the selected report. As indicated at 502, 602, 702, 802, and 902, the display of the reports includes a graphical indication (e.g., plotted data points) of data values during anomalous time intervals. In an embodiment, the graphical representations of the data values during anomalous time intervals are a different color from the graphical representations of data values during the non-anomalous time intervals. For example, the graphical representations of the data values during anomalous time intervals may be red and the graphical representations of the data values during non-anomalous time intervals may be green. In accordance with an aspect of the disclosure, graphically differentiating anomalous time intervals from non-anomalous time intervals enables users of user devices 118 to readily identify abnormal operating ranges of an industrial process.

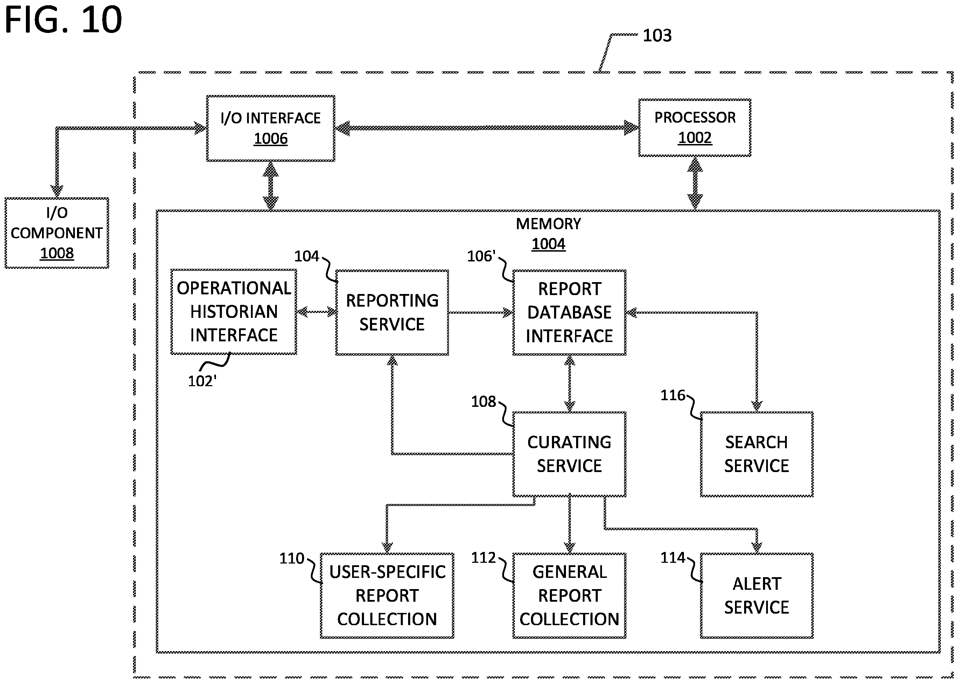

FIG. 10 illustrates an exemplary architecture of computing device 103 programmed to provide aspects of the operational historian data pattern detection and communication services system 100 via a software environment. In this alternative embodiment, computing device 103 includes a processor 1002, a memory 1004, and an input/output (I/O) interface 1006 that interfaces with an I/O component 1008. The memory 1004 includes an operational historian interface 102', reporting service 104, a report database 106', curating service 108, user-specific report collection 110, general report collection 112, alert service 114, and search service 116 each embodied in processor executable instructions for executing by processor 1002.

The processor 1002, memory 1004, and I/O interface 1006 are communicatively connected and/or electrically connected to each other. The I/O interface 1006 is communicatively and/or electrically connected to the I/O component 1008. The processor 1002 is adapted to execute processor-executable instructions stored in the memory 1004 for implementing the operational historian interface 102', reporting service 104, report database interface 106', curating service 108, user-specific report collection 110, general report collection 112, alert service 114, and/or search service 116. The I/O interface 1006 of FIG. 10 provides a physical data connection between computing device 103 and I/O component 1008. In an embodiment, I/O interface 1006 is a network interface card (NIC) or modem and I/O component 1008 is a telecommunications network, as further described herein.

The operational historian interface 102' of FIG. 10 is adapted to provide a connection between computing device 103 and operational historian 102. In an exemplary embodiment, operational historian interface 102' retrieves and/or receives data from operational historian 102 via I/O interface 1006, as further described herein. The report database interface 106' of FIG. 10 is adapted to provide a connection between computing device 103 and a computer-readable storage medium storing report databases 106. In an exemplary embodiment, report database interface 106' facilitates publishing of reports from reporting service 104 to report database 106 via I/O interface 1006, as further described herein. In another embodiment, report database interface 106' facilitates access to report database 106 by curating service 108 and search service 116 via I/O interface 1006, as further described herein.

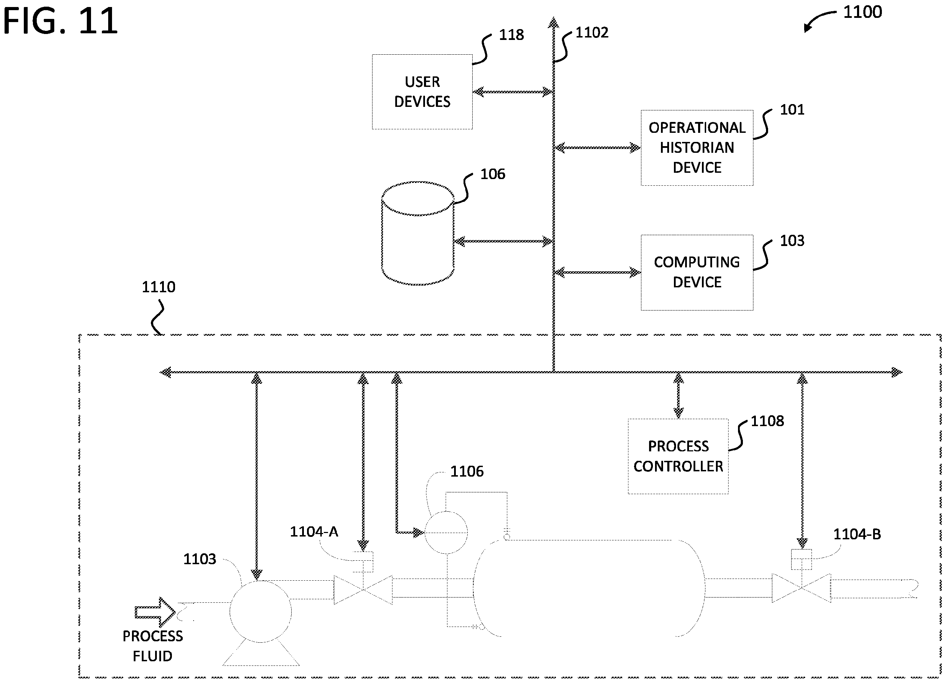

FIG. 11 illustrates an exemplary industrial process system 1100 within which aspects of the disclosure may be incorporated. The system 1100 includes computing device 103, operational historian device 101, report database 106, user devices 118, a communication network 1102, and an exemplary fluid processing system 1110. The operational historian device 101 further includes operational historian 102. The fluid processing system 1110 of the exemplary embodiment of FIG. 11 further includes a pump 1103, valves 1104, a sensor 1106, and process controller 1108. In system 1100, computing device 103, operational historian device 101, report database 106, user devices 118, and various components of the fluid processing system 1110 (e.g., pump 1103, valves 1104, sensor 1106, process controller 1108) are communicatively connected via the communication network 1102.

The communication network 1102 is capable of facilitating the exchange of data among historian device 101, computing device 103, report database 106, user devices 118, and components of fluid processing system 1110. The communication network 1102 in the embodiment of FIG. 11 includes a wide area network (WAN) and/or a local area network (LAN) that is connectable to other telecommunications networks, including other WANs, LANs, and/or portions of the Internet or an intranet. The communication network 1102 may be any telecommunications network that facilitates the exchange of data, such as those that operate according to the IEEE 802.3 (e.g., Ethernet) and/or the IEEE 802.11 (e.g., Wi-Fi) protocols, for example. In another embodiment, communication network 1102 is any medium that allows data to be physically transferred through serial or parallel communication channels (e.g., copper wire, optical fiber, computer bus, wireless communication channel, etc.). In an embodiment, communication network 1102 comprises at least in part a process control network. In another embodiment, communication network 1102 comprises at least in part a supervisory control and data acquisition (SCADA) system. In yet another embodiment, communication network 1102 comprises at least in part an enterprise manufacturing intelligence (EMI) / operational intelligence (OI) system.

The historian device 101 is adapted to provide operational historian 102, which is adapted to store (e.g., "historize") various types of data related to fluid processing system 1110, as further described herein. The computing device 103 is adapted to provide reporting service 104, report database 106 (or an interface to a computer-readable storage medium storing report database 106), curating service 108, user-specific report collection 110, general report collection 112, alert service 114, and search service 116, as further described herein. The report database 106 is adapted to store reports generated by reporting service 104 as an organized collection of data, as further described herein. The user devices 118 are adapted to receive from and transmit data to user-specific report collection 110, general report collection 112, alert service 114, and/or search service 116, as further described herein.

Still referring to FIG. 11, fluid processing system 1110 is adapted for changing or refining raw materials to create end products. It will be apparent to one skilled in the art that aspects of the present disclosure are capable of optimizing processes and processing systems other than fluid processing system 1110 and that system 1110 is presented for illustration purposes only. Additional exemplary processes include, but are not limited to, those in the chemical, oil and gas, food and beverage, pharmaceutical, water treatment, and power industries. For example, processes may include conveyers, power distribution systems, and/or processes or operations that cannot be interrupted. In an embodiment, process controller 1108 provides an interface or gateway between components of fluid processing system 1110 (e.g., pump 1103, valves 1104, sensor 1106) and other components of system 1100 (e.g., historian device 101, computing device 103, report database 106, user devices 118). In another embodiment, components of fluid processing system 1110 communicate directly with historian device 101, computing device 103, report database 106, and user devices 118 via communication network 1102. In yet another embodiment, process controller 1108 transmits data to and receives data from pump 1103, valves 1104, and sensor 1106 for controlling and/or monitoring various aspects of fluid processing system 1110.

In an embodiment, aspects of the disclosure are utilized with user devices 118 embodied as mobile devices with mobile apps. For example, aspects of the disclosure may be installed via app stores and aspects may be optimized for touchscreen embodiments. In other embodiments, aspects of the disclosure may be browser-based (e.g., served application that showcases historian capabilities). In an embodiment, aspects of the disclosure may be used as a productivity tool to allow debugging and analysis for custom applications. In an embodiment, aspects of the disclosure take advantage of capabilities including leveraging summary tags, leveraging model view and derivation view, and leveraging flexible events, data dictionary, and history. Aspects of the disclosure utilize a technology stack including an HTML5 app (e.g., Angular.js and D3), modular components, and a managed historian. Aspects of the disclosure are component-based (e.g., value and time axis pieces can be shared between all chart types). Exemplary modular components include charts, trends, grids, and the like.

In an aspect, a system includes a processor (e.g., processor 1002), a computer-readable storage device (e.g., memory 1004), a report database (e.g., report database 106), and a reporting service (e.g., reporting service 104). The reporting service comprises processor-executable instructions stored on the computer-readable storage device that, when executed by the processor, configure the reporting service to detect operational changes in an industrial process. The reporting service receives (302) timeseries data. The time-series data is associated with a process control system (e.g., industrial process system 1100) and represents one or more values of a process control tag of the process control system over an interval of time. Exemplary and non-limiting process control tags include physical properties of valves, sensors, pumps, tanks, and the like within the continuous process. The reporting service apportions (304) the retrieved time-series data into a plurality of sub-intervals of the interval of time. Each sub-interval includes a predetermined number of individual data values sampled from the time-series data. The reporting service further determines (306) the minimum data value and the maximum data value of the individual data values of each sub-interval and calculates (308) an entropy of the individual data values of each sub-interval. The entropy of each sub-interval is scaled (310) based on the determined minimum and maximum data values of the sub-interval. In an embodiment, the entropy is scaled based on the difference between the maximum and minimum values (i.e., the range). The reporting service detects that one or more subintervals are anomalous relative to an expected value by performing (312) a statistical analysis for each sub-interval. The reporting service further publishes (314) at least one report indicative of the detected anomalous sub-intervals into the report database.

In another aspect, the present disclosure provides a computer- implemented method of detecting operational changes in an industrial process. The method includes a reporting service receiving time-series data for analysis. The time-series data is associated with a process control system and the data represents one or more values of a process control tag of the process control system over an interval of time. The reporting service analyzes the process data by apportioning the data into a plurality of subintervals that each include a predetermined number of individual data value sampled from the time-series data, determining a minimum data value and a maximum data value of the individual data values of each sub-interval, calculating an entropy of the individual data values of each sub-interval, and scaling the entropy of each sub-interval based on the determined minimum and maximum data values of the sub-interval. The method further includes detecting that one or more sub-intervals are anomalous relative to an expected value by performing a statistical analysis for each sub-interval. The reporting service publishes at least one report indicative of the detected anomalous sub-intervals into a report database.

In yet another aspect, a computer-readable storage device stores processor readable instructions including instructions that, when executed by a processor, implement a reporting service for detecting operational changes in an industrial process. The reporting service is configured to receive time-series data. The time-series data is associated with a process control system and represents one or more values of a process control tag of the process control system over an interval of time. The reporting service is configured to apportion the retrieved time-series data into a plurality of sub-intervals of the interval of time. Each sub-interval includes a predetermined number of individual data values sampled from the time-series data. The reporting service is further configured to determine the minimum data value and the maximum data value of the individual data values of each sub-interval, calculate an entropy of the individual data values of each subinterval, and scale the entropy of each sub-interval based on the determined minimum and maximum data values of the sub-interval. In an embodiment, the entropy is scaled based on the difference between the maximum and minimum values (i.e., the range). The reporting service is configured to detect that one or more sub-intervals are anomalous relative to an expected value by performing a statistical analysis for each sub-interval. The reporting service is further configured to publish at least one report indicative of the detected anomalous sub-intervals into the report database.

In one form, the statistical analysis is at least one of a mean analysis and a standard deviation analysis. In another form, the detected anomalous sub-intervals are at least one of an increase and a decrease in entropy during the sub-intervals. In yet another form, the detected anomalous sub-intervals are an operational change in the industrial process. In another form, the detected anomalous sub-intervals include data values that have changed ranges. In yet another form, the predetermined number of individual data values is large enough to supply meaningful entropy calculations and small enough to trigger anomalies with reasonable delay. In another form, the plurality of sub-intervals is a number of sub-intervals large enough to resolve small changes in patterns in the time-series data and small enough so that clumping occurs where a plurality of time-series data values map to the same sub-interval.

Embodiments of the present disclosure may comprise a special purpose computer including a variety of computer hardware, as described in greater detail below.

Embodiments within the scope of the present disclosure also include computer-readable media for carrying or having computer-executable instructions or data structures stored thereon. Such computer-readable media can be any available media that can be accessed by a special purpose computer. By way of example, and not limitation, such computer-readable media can comprise RAM, ROM, EEPROM, CD-ROM or other optical disk storage, magnetic disk storage, or other magnetic storage devices, or any other medium that can be used to carry or store desired program code means in the form of computer-executable instructions or data structures and that can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

The following discussion is intended to provide a brief, general description of a suitable computing environment in which aspects of the disclosure may be implemented. Although not required, aspects of the disclosure will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represent examples of corresponding acts for implementing the functions described in such steps.

Those skilled in the art will appreciate that aspects of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Aspects of the disclosure may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An exemplary system for implementing aspects of the disclosure includes a special purpose computing device in the form of a conventional computer, including a processing unit, a system memory, and a system bus that couples various system components including the system memory to the processing unit. The system bus may be any of several types of bus structures including a memory bus or memory controller, a peripheral bus, and a local bus using any of a variety of bus architectures. The system memory includes read only memory (ROM) and random access memory (RAM). A basic input/output system (BIOS), containing the basic routines that help transfer information between elements within the computer, such as during start-up, may be stored in ROM. Further, the computer may include any device (e.g., computer, laptop, tablet, PDA, cell phone, mobile phone, a smart television, and the like) that is capable of receiving or transmitting an IP address wirelessly to or from the internet.

The computer may also include a magnetic hard disk drive for reading from and writing to a magnetic hard disk, a magnetic disk drive for reading from or writing to a removable magnetic disk, and an optical disk drive for reading from or writing to removable optical disk such as a CD-ROM or other optical media. The magnetic hard disk drive, magnetic disk drive, and optical disk drive are connected to the system bus by a hard disk drive interface, a magnetic disk drive-interface, and an optical drive interface, respectively. The drives and their associated computer-readable media provide nonvolatile storage of computer-executable instructions, data structures, program modules, and other data for the computer. Although the exemplary environment described herein employs a magnetic hard disk, a removable magnetic disk, and a removable optical disk, other types of computer readable media for storing data can be used, including magnetic cassettes, flash memory cards, digital video disks, Bernoulli cartridges, RAMs, ROMs, solid state drives (SSDs), and the like.

The computer typically includes a variety of computer readable media. Computer readable media can be any available media that can be accessed by the computer and includes both volatile and nonvolatile media, removable and non-removable media. By way of example, and not limitation, computer readable media may comprise computer storage media and communication media. Computer storage media include both volatile and nonvolatile, removable and non-removable media implemented in any method or technology for storage of information such as computer readable instructions, data structures, program modules or other data. Computer storage media are non-transitory and include, but are not limited to, RAM, ROM, EEPROM, flash memory or other memory technology, CD-ROM, digital versatile disks (DVD) or other optical disk storage, SSDs, magnetic cassettes, magnetic tape, magnetic disk storage or other magnetic storage devices, or any other medium which can be used to store the desired non-transitory information, which can accessed by the computer. Alternatively, communication media typically embody computer readable instructions, data structures, program modules or other data in a modulated data signal such as a carrier wave or other transport mechanism and includes any information delivery media.

Program code means comprising one or more program modules may be stored on the hard disk, magnetic disk, optical disk, ROM, and/or RAM, including an operating system, one or more application programs, other program modules, and program data. A user may enter commands and information into the computer through a keyboard, pointing device, or other input device, such as a microphone, joy stick, game pad, satellite dish, scanner, or the like. These and other input devices are often connected to the processing unit through a serial port interface coupled to the system bus. Alternatively, the input devices may be connected by other interfaces, such as a parallel port, a game port, or a universal serial bus (USB). A monitor or another display device is also connected to the system bus via an interface, such as video adapter 48. In addition to the monitor, personal computers typically include other peripheral output devices (not shown), such as speakers and printers.

One or more aspects of the disclosure may be embodied in computer executable instructions (i.e., software), routines, or functions stored in system memory or nonvolatile memory as application programs, program modules, and/or program data. The software may alternatively be stored remotely, such as on a remote computer with remote application programs. Generally, program modules include routines, programs, objects, components, data structures, etc. that perform particular tasks or implement particular abstract data types when executed by a processor in a computer or other device. The computer executable instructions may be stored on one or more tangible, non-transitory computer readable media (e.g., hard disk, optical disk, removable storage media, solid state memory, RAM, etc.) and executed by one or more processors or other devices. As will be appreciated by one of skill in the art, the functionality of the program modules may be combined or distributed as desired in various embodiments. In addition, the functionality may be embodied in whole or in part in firmware or hardware equivalents such as integrated circuits, application specific integrated circuits, field programmable gate arrays (FPGA), and the like.

The computer may operate in a networked environment using logical connections to one or more remote computers. The remote computers may each be another personal computer, a tablet, a PDA, a server, a router, a network PC, a peer device, or other common network node, and typically include many or all of the elements described above relative to the computer. The logical connections include a local area network (LAN) and a wide area network (WAN) that are presented here by way of example and not limitation. Such networking environments are commonplace in office-wide or enterprise wide computer networks, intranets and the Internet.

When used in a LAN networking environment, the computer is connected to the local network through a network interface or adapter. When used in a WAN networking environment, the computer may include a modem, a wireless link, or other means for establishing communications over the wide area network, such as the Internet. The modem, which may be internal or external, is connected to the system bus via the serial port interface. In a networked environment, program modules depicted relative to the computer, or portions thereof, may be stored in the remote memory storage device. It will be appreciated that the network connections shown are exemplary and other means of establishing communications over wide area network may be used.

Preferably, computer-executable instructions are stored in a memory, such as the hard disk drive, and executed by the computer. Advantageously, the computer processor has the capability to perform all operations (e.g., execute computer-executable instructions) in real-time.

The order of execution or performance of the operations in embodiments of the disclosure illustrated and described herein is not essential, unless otherwise specified. That is, the operations may be performed in any order, unless otherwise specified, and embodiments of the disclosure may include additional or fewer operations than those disclosed herein. For example, it is contemplated that executing or performing a particular operation before, contemporaneously with, or after another operation is within the scope of aspects of the disclosure.

Embodiments of the disclosure may be implemented with computer executable instructions. The computer-executable instructions may be organized into one or more computer-executable components or modules. Aspects of the disclosure may be implemented with any number and organization of such components or modules. For example, aspects of the disclosure are not limited to the specific computer-executable instructions or the specific components or modules illustrated in the figures and described herein. Other embodiments of the disclosure may include different computer-executable instructions or components having more or less functionality than illustrated and described herein.

When introducing elements of aspects of the disclosure or the embodiments thereof, the articles "a", "an", "the" and "said" are intended to mean that there are one or more of the elements. The terms "comprising", "including", and "having" are intended to be inclusive and mean that there may be additional elements other than the listed elements. Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

**Claims**

1. A system, comprising:

   a processor (1002);
   a computer-readable storage device (1004);
   a report database (106); and
   a reporting service (104), wherein the reporting service (104) comprises processor-executable instructions stored on the computer-readable storage device (1004), wherein the instructions, when executed by the processor (1002), configure the reporting service (104) to:

   receive (302) time-series data, wherein the time-series data is associated with a process control system, and wherein the time-series data represents one or more values of a process control tag of the process control system over an interval of time; apportion (304) the retrieved time-series data into a plurality of sub-intervals, wherein the plurality of sub-intervals comprise the interval of time, and wherein each sub-interval includes a predetermined number of individual data values sampled from the time-series data;
   determine (306) a minimum data value of the individual data values of each sub-interval;
   determine (306) a maximum data value of the individual data values of each sub-interval;
   execute (308) an entropy calculation of the individual data values of each sub-interval;
   scale (310) the entropy of each sub-interval based on the determined minimum and maximum data values thereof;
   detect (312) that one or more sub-intervals are anomalous relative to an expected value by performing a statistical analysis on the scaled entropy value for each sub-interval; and
   publish (314) at least one report indicative of the detected anomalous sub-intervals into the report database.

2. The system of claim 1, wherein the statistical analysis comprises at least one of a mean analysis and a standard deviation analysis.

3. The system of claim 1, wherein the detected anomalous sub-intervals comprise

   - at least one of an increase and a decrease in entropy during the sub-intervals,
   - an operational change in the industrial process, or
   - one or more of the individual data values thereof changing ranges.

4. The system of claim 1, wherein the predetermined number of individual data values is large enough to supply meaningful entropy calculations and small enough to trigger anomalies with reasonable delay.

5. The system of claim 4, wherein the plurality of sub-intervals comprises a number of sub-intervals large enough to resolve small changes in patterns in the time-series data and small enough so that clumping occurs where a plurality of time-series data values map to the same sub-interval.

6. A method of detecting operational changes in an industrial process, comprising:

Receiving (302), by a reporting service (104) executing on one or more computing devices (103), time- series data for analysis, the time-series data being associated with a process control system, and the time-series data representing one or more values of a process control tag of the process control system over an interval of time;
Analyzing, by the reporting service (104), the process data by:

apportioning (304) the received time-series data into a plurality of sub-intervals, the plurality of sub-intervals comprising the interval of time, and each sub-interval including a predetermined number of individual data values sampled from the time- series data,
determining (306) a minimum data value of the individual data values of each sub interval, determining (306) a maximum data value of the individual data values of each sub-interval,
executing (308) an entropy calculation of the individual data values of each sub-interval, and
scaling (310) the entropy of each sub-interval based on the determined minimum and maximum data values thereof;
detecting (312), by the reporting service (104), that one or more sub-intervals are anomalous relative to an expected value by performing a statistical analysis on the scaled entropy value for each sub-interval; and
publishing (314), by the reporting service (104), at least one report indicative of the detected anomalous sub-intervals into a report database.

7. The method of claim 6, wherein the statistical analysis comprises at least one of a mean analysis and a standard deviation analysis.

8. The method of claim 6, wherein said detecting (312) that one or more sub-intervals are anomalous comprises

- detecting at least one of an increase and a decrease in entropy during the sub-intervals,
- detecting an operational change in the industrial process during the sub-intervals, or
- detecting the individual data values thereof changing from a small range to a large range.

9. The method of claim 6, wherein the predetermined number of individual data values is large enough to supply meaningful entropy calculations and small enough to trigger anomalies with reasonable delay.

10. The method of claim 9, wherein said dividing the received time-series data into a plurality of sub-intervals comprises dividing the received time-series data into a number of sub-intervals large enough to resolve small changes in patterns in the received time-series data and small enough so that clumping occurs where a plurality of time-series data values map to the same sub-interval.

11. A computer-readable storage device (1004) having processor readable instructions stored thereon including instructions that, when executed by a processor (1002), implement a reporting service (104) for detecting operational changes in an industrial process, the reporting service (104) configured to:

receive (302) time-series data, wherein the time-series data is associated with a process control system, and wherein the time-series data represents one or more values of a process control tag of the process control system over an interval of time;
apportion (304) the retrieved time-series data into a plurality of sub-intervals, wherein the plurality of sub-intervals comprise the interval of time, and wherein each sub-interval includes a predetermined number of individual data values sampled from the time-series data;
determine (306) a minimum data value of the individual data values of each sub-interval; determine (306) a maximum data value of the individual data values of each sub-interval; execute (308) an entropy calculation of each sub-interval;
scale (310) the entropy of each sub-interval based on the determined minimum and maximum data values thereof;
detect (312) that one or more sub-intervals are anomalous relative to an expected value by performing a statistical analysis on the scaled entropy value for each sub-interval; and
publish (314) at least one report indicative of the detected anomalous sub-intervals into a report database.

12. The computer readable storage device (1004) of claim 11, wherein the statistical analysis comprises at least one of a mean analysis and a standard deviation analysis.

13. The computer readable storage device (1004) of claim 11, wherein the detected anomalous sub-intervals comprise

- at least one of an increase and a decrease in entropy during the sub-intervals,
- an operational change in the industrial process, or
- one or more of the individual data values thereof changing ranges.

14. The computer readable storage device (1004) of claim 11, wherein the predetermined number of individual data values is large enough to supply meaningful entropy calculations and small enough to trigger anomalies with reasonable delay, and wherein the plurality of sub-intervals comprises a number of sub-intervals large enough to resolve small changes in patterns in the time-series data and small enough so that clumping occurs where a plurality of time-series data values map to the same sub-interval.

**Patentansprüche**

1. System, umfassend:

   einen Prozessor (1002);
   eine computerlesbare Speichervorrichtung (1004);
   eine Berichtsdatenbank (106); und
   einen Berichtsdienst (104), wobei der Berichtsdienst (104) prozessorausführbare, in der computerlesbaren Speichervorrichtung (1004) gespeicherte Anweisungen umfasst, wobei die Anweisungen, wenn sie von dem Prozessor (1002) ausgeführt werden, den Berichtsdienst (104) für Folgendes konfigurieren:

   Empfangen (302) von Zeitreihendaten, wobei die Zeitreihendaten einem Prozessleitsystem zugeordnet sind und wobei die Zeitreihendaten einen oder mehrere Werte eines Prozessleitkennzeichens des Prozessleitsystems während eines Zeitintervalls darstellen; Aufteilen (304) der abgerufenen Zeitreihendaten in mehrere Teilintervalle, wobei die mehreren Teilintervalle das Zeitintervall umfassen und wobei jedes Teilintervall eine vorgegebene Anzahl von aus den Zeitreihendaten erhobenen einzelnen Datenwerten enthält;
   Bestimmen (306) eines niedrigsten Datenwerts der einzelnen Datenwerte jedes Teilintervalls;
   Bestimmen (306) eines höchsten Datenwerts der einzelnen Datenwerte jedes Teilintervalls;
   Ausführen (308) einer Entropieberechnung der einzelnen Datenwerte jedes Teilintervalls;
   Skalieren (310) der Entropie jedes Teilintervalls basierend auf dem bestimmten niedrigsten Datenwert und dem bestimmten höchsten Datenwert davon;
   Erkennen (312), dass ein oder mehrere Teilintervalle relativ zu einem Erwartungswert anomal sind, durch Durchführen einer statistischen Analyse an dem skalierten Entropiewert für jedes Teilintervall; und
   Veröffentlichen (314) mindestens eines Berichts, der die erkannten anomalen Teilintervalle angibt, in der Berichtsdatenbank.

2. System nach Anspruch 1, wobei die statistische Analyse mindestens eine von einer Durchschnittsanalyse und einer Standardabweichungsanalyse umfasst.

3. System nach Anspruch 1, wobei die erkannten anomalen Teilintervalle Folgendes umfassen:

   - mindestens eine von einer Erhöhung und einer Verringerung der Entropie während der Teilintervalle,
   - eine Betriebsänderung bei dem Industrieprozess oder
   - dass einer oder mehrere der einzelnen Datenwerte davon Bereiche ändern.

4. System nach Anspruch 1, wobei die vorgegebene Anzahl einzelner Datenwerte hinreichend groß, sodass sich sinnvolle Entropieberechnungen ergeben, und hinreichend klein ist, sodass Anomalien mit angemessener Verzögerung ausgelöst werden.

5. System nach Anspruch 4, wobei die mehreren Teilintervalle eine Anzahl von Teilintervallen umfassen, die hinreichend groß, sodass kleine Änderungen in Mustern in den Zeitreihendaten aufgelöst werden, und hinreichend klein ist, sodass eine Klumpung entsteht, wenn mehrere Zeitreihendatenwerte auf dasselbe Teilintervall entfallen.

6. Verfahren zum Erkennen von Betriebsänderungen bei einem Industrieprozess, umfassend:

   Empfangen (302), durch einen in einer oder mehreren Rechenvorrichtungen (103) laufenden Berichtsdienst (104), von Zeitreihendaten zur Analyse, wobei die Zeitreihendaten einem Prozessleitsystem zugeordnet sind und die Zeitreihendaten einen oder mehrere Werte eines Prozessleitkennzeichens des Prozessleitsystems während eines Zeitintervalls darstellen;

Analysieren, durch den Berichtsdienst (104), der Prozessdaten durch Folgendes:

Aufteilen (304) der empfangenen Zeitreihendaten in mehrere Teilintervalle, wobei die mehreren Teilintervalle das Zeitintervall umfassen und jedes Teilintervall eine vorgegebene Anzahl von aus den Zeitreihendaten erhobenen einzelnen Datenwerten enthält,

Bestimmen (306) eines niedrigsten Datenwerts der einzelnen Datenwerte jedes Teilintervalls,

Bestimmen (306) eines höchsten Datenwerts der einzelnen Datenwerte jedes Teilintervalls,

Ausführen (308) einer Entropieberechnung der einzelnen Datenwerte jedes Teilintervalls und

Skalieren (310) der Entropie jedes Teilintervalls basierend auf dem bestimmten niedrigsten Datenwert und dem bestimmten höchsten Datenwert davon;

Erkennen (312) durch den Berichtsdienst (104), dass ein oder mehrere Teilintervalle relativ zu einem Erwartungswert anomal sind, durch Durchführen einer statistischen Analyse an dem skalierten Entropiewert für jedes Teilintervall; und Veröffentlichen (314), durch den Berichtsdienst (104), mindestens eines Berichts, der die erkannten anomalen Teilintervalle angibt, in einer Berichtsdatenbank.

7. Verfahren nach Anspruch 6, wobei die statistische Analyse mindestens eine von einer Durchschnittsanalyse und einer Standardabweichungsanalyse umfasst.

8. Verfahren nach Anspruch 6, wobei das Erkennen (312), dass ein oder mehrere Teilintervalle anomal sind, Folgendes umfasst:

- Erkennen mindestens einer von einer Erhöhung und einer Verringerung der Entropie während der Teilintervalle,
- Erkennen einer Betriebsänderung bei dem Industrieprozess während der Teilintervalle oder
- Erkennen einer Änderung der einzelnen Datenwerte davon von einem kleinen Bereich zu einem großen Bereich.

9. Verfahren nach Anspruch 6, wobei die vorgegebene Anzahl einzelner Datenwerte hinreichend groß, sodass sich sinnvolle Entropieberechnungen ergeben, und hinreichend klein ist, sodass Anomalien mit angemessener Verzögerung ausgelöst werden.

10. Verfahren nach Anspruch 9, wobei das Aufteilen der empfangenen Zeitreihendaten in mehrere Teilintervalle umfasst, dass die empfangenen Zeitreihendaten in eine Anzahl von Teilintervallen aufgeteilt werden, die hinreichend groß, sodass kleine Änderungen in Mustern in den empfangenen Zeitreihendaten aufgelöst werden, und hinreichend klein ist, sodass eine Klumpung entsteht, wenn mehrere Zeitreihendatenwerte auf dasselbe Teilintervall entfallen.

11. Computerlesbare Speichervorrichtung (1004) mit darin gespeicherten prozessorausführbaren Anweisungen, die Anweisungen enthalten, die, wenn sie von einem Prozessor (1002) ausgeführt werden, einen Berichtsdienst (104) zum Erkennen von Betriebsänderungen bei einem Industrieprozess implementieren, wobei der Berichtsdienst (104) für Folgendes konfiguriert ist:

Empfangen (302) von Zeitreihendaten, wobei die Zeitreihendaten einem Prozessleitsystem zugeordnet sind und wobei die Zeitreihendaten einen oder mehrere Werte eines Prozessleitkennzeichens des Prozessleitsystems während eines Zeitintervalls darstellen;

Aufteilen (304) der abgerufenen Zeitreihendaten in mehrere Teilintervalle, wobei die mehreren Teilintervalle das Zeitintervall umfassen und wobei jedes Teilintervall eine vorgegebene Anzahl von aus den Zeitreihendaten erhobenen einzelnen Datenwerten enthält;

Bestimmen (306) eines niedrigsten Datenwerts der einzelnen Datenwerte jedes Teilintervalls;

Bestimmen (306) eines höchsten Datenwerts der einzelnen Datenwerte jedes Teilintervalls;

Ausführen (308) einer Entropieberechnung jedes Teilintervalls;

Skalieren (310) der Entropie jedes Teilintervalls basierend auf dem bestimmten niedrigsten Datenwert und dem bestimmten höchsten Datenwert davon;

Erkennen (312), dass ein oder mehrere Teilintervalle relativ zu einem Erwartungswert anomal sind, durch Durchführen einer statistischen Analyse an dem skalierten Entropiewert für jedes Teilintervall; und

Veröffentlichen (314) mindestens eines Berichts, der die erkannten anomalen Teilintervalle angibt, in einer Berichtsdatenbank.

**12.** Computerlesbare Speichervorrichtung (1004) nach Anspruch 11, wobei die statistische Analyse mindestens eine von einer Durchschnittsanalyse und einer Standardabweichungsanalyse umfasst.

**13.** Computerlesbare Speichervorrichtung (1004) nach Anspruch 11, wobei die erkannten anomalen Teilintervalle Folgendes umfassen:

- mindestens eine von einer Erhöhung und einer Verringerung der Entropie während der Teilintervalle,
- eine Betriebsänderung bei dem Industrieprozess oder
- dass einer oder mehrere der einzelnen Datenwerte davon Bereiche ändern.

**14.** Computerlesbare Speichervorrichtung (1004) nach Anspruch 11, wobei die vorgegebene Anzahl einzelner Datenwerte hinreichend groß, sodass sich sinnvolle Entropieberechnungen ergeben, und hinreichend klein ist, sodass Anomalien mit angemessener Verzögerung ausgelöst werden, und wobei die mehreren Teilintervalle eine Anzahl von Teilintervallen umfassen, die hinreichend groß, sodass kleine Änderungen in Mustern in den Zeitreihendaten aufgelöst werden, und hinreichend klein ist, sodass eine Klumpung entsteht, wenn mehrere Zeitreihendatenwerte auf dasselbe Teilintervall entfallen.

**Revendications**

**1.** Système, comprenant :

un processeur (1002) ;
un dispositif de stockage lisible par ordinateur (1004) ;
une base de données de rapports (106) ; et
un service de rapport (104), le service de rapport (104) comprenant des instructions exécutables par processeur stockées sur le dispositif de stockage lisible par ordinateur (1004), les instructions, lorsqu'elles sont exécutées par le processeur (1002), configurant le service de rapport (104) pour :

recevoir (302) des données chronologiques, les données chronologiques étant associées à un système de contrôle de procédés, et les données chronologiques représentant une ou plusieurs valeurs d'une balise de contrôle de procédés du système de contrôle de procédés au cours d'un intervalle de temps ; répartir (304) les données chronologiques récupérées en une pluralité de sous-intervalles, la pluralité de sous-intervalles comprenant l'intervalle de temps, et chaque sous-intervalle comprenant un nombre prédéterminé de valeurs de données individuelles échantillonnées à partir des données chronologiques ;
déterminer (306) une valeur minimale de données parmi les valeurs de données individuelles de chaque sous-intervalle ;
déterminer (306) une valeur maximale de données parmi les valeurs de données individuelles de chaque sous-intervalle ;
exécuter (308) un calcul d'entropie des valeurs de données individuelles de chaque sous-intervalle ;
mettre à l'échelle (310) l'entropie de chaque sous-intervalle sur la base des valeurs minimale et maximale de données déterminées ;
détecter (312) qu'un ou plusieurs sous-intervalles sont anormaux par rapport à une valeur attendue en effectuant une analyse statistique sur la valeur d'entropie mise à l'échelle pour chaque sous-intervalle ; et
publier (314) dans la base de données de rapports au moins un rapport indiquant les sous-intervalles anormaux détectés.

**2.** Système selon la revendication 1, dans lequel l'analyse statistique comprend une analyse de moyenne et/ou une analyse d'écart-type.

**3.** Système selon la revendication 1, dans lequel les sous-intervalles anormaux détectés comprennent :

- une augmentation et/ou une diminution de l'entropie au cours des sous-intervalles,
- une variation opérationnelle du procédé industriel, ou
- une ou plusieurs de leurs valeurs individuelles qui changent de plage.

**4.** Système selon la revendication 1, dans lequel le nombre prédéterminé de valeurs de données individuelles est suffisamment grand pour fournir des calculs d'entropie significatifs et suffisamment petit pour déclencher des anomalies dans un délai raisonnable.

5. Système selon la revendication 4, dans lequel la pluralité de sous-intervalles comprend un nombre de sous-intervalles suffisamment grand pour résoudre de légères variations de modèles dans les données chronologiques et suffisamment petit pour qu'un regroupement se produise lorsqu'une pluralité de valeurs de données chronologiques correspondent au même sous-intervalle.

6. Procédé de détection de variations opérationnelles dans un procédé industriel, comprenant les étapes consistant à :

recevoir (302), par un service de rapport (104) s'exécutant sur un ou plusieurs dispositifs informatiques (103), des données chronologiques à analyser, les données chronologiques étant associées à un système de contrôle de procédés, et les données chronologiques représentant une ou plusieurs valeurs d'une balise de contrôle de procédés du système de contrôle de procédés au cours d'un intervalle de temps ;
analyser, par le service de rapport (104), les données de procédés en effectuant les étapes consistant à :

répartir (304) les données chronologiques reçues en une pluralité de sous-intervalles, la pluralité de sous-intervalles comprenant l'intervalle de temps, et chaque sous-intervalle comprenant un nombre prédéterminé de valeurs de données individuelles échantillonnées à partir des données chronologiques,
déterminer (306) une valeur minimale de données parmi les valeurs de données individuelles de chaque sous-intervalle,
déterminer (306) une valeur maximale de données parmi les valeurs de données individuelles de chaque sous-intervalle,
exécuter (308) un calcul d'entropie des valeurs de données individuelles de chaque sous-intervalle, et
mettre à l'échelle (310) l'entropie de chaque sous-intervalle sur la base des valeurs minimale et maximale de données déterminées ;

détecter (312), par le service de rapport (104), qu'un ou plusieurs sous-intervalles sont anormaux par rapport à une valeur attendue en effectuant une analyse statistique sur la valeur d'entropie mise à l'échelle pour chaque sous-intervalle ; et
publier (314), par le service de rapport (104), dans une base de données de rapports, au moins un rapport indiquant les sous-intervalles anormaux détectés.

7. Procédé selon la revendication 6, dans lequel l'analyse statistique comprend une analyse de moyenne et/ou une analyse d'écart-type.

8. Procédé selon la revendication 6, dans lequel ladite détection (312) qu'un ou plusieurs sous-intervalles sont anormaux comprend les étapes consistant à :

- détecter une augmentation et/ou une diminution de l'entropie au cours des sous-intervalles,
- détecter une variation opérationnelle dans le procédé industriel au cours des sous-intervalles, ou
- détecter que leurs valeurs de données individuelles varient d'une petite plage à une grande plage.

9. Procédé selon la revendication 6, dans lequel le nombre prédéterminé de valeurs de données individuelles est suffisamment grand pour fournir des calculs d'entropie significatifs et suffisamment petit pour déclencher des anomalies dans un délai raisonnable.

10. Procédé selon la revendication 9, dans lequel ladite répartition des données chronologiques reçues en une pluralité de sous-intervalles comprend l'étape consistant à répartir les données chronologiques reçues en un certain nombre de sous-intervalles suffisamment grand pour résoudre de légères variations de modèles dans les données chronologiques reçues et suffisamment petit pour qu'un regroupement se produise lorsqu'une pluralité de valeurs de données chronologiques correspondent au même sous-intervalle.

11. Dispositif de stockage lisible par ordinateur (1004) sur lequel sont stockées des instructions lisibles par processeur, notamment des instructions qui, lorsqu'elles sont exécutées par un processeur (1002), mettent en œuvre un service de rapport (104) pour détecter des variations opérationnelles dans un procédé industriel, le service de rapport (104) étant configuré pour :

recevoir (302) des données chronologiques, les données chronologiques étant associées à un système de contrôle de procédés, et les données chronologiques représentant une ou plusieurs valeurs d'une balise de contrôle de procédés du système de contrôle de procédés au cours d'un intervalle de temps ;

répartir (304) les données chronologiques récupérées en une pluralité de sous-intervalles, la pluralité de sous-intervalles comprenant l'intervalle de temps, et chaque sous-intervalle comprenant un nombre prédéterminé de valeurs de données individuelles échantillonnées à partir des données chronologiques ;

déterminer (306) une valeur minimale de données parmi les valeurs de données individuelles de chaque sous-intervalle ;

déterminer (306) une valeur maximale de données parmi les valeurs de données individuelles de chaque sous-intervalle ;

exécuter (308) un calcul d'entropie de chaque sous-intervalle ;

mettre à l'échelle (310) l'entropie de chaque sous-intervalle sur la base des valeurs minimale et maximale de données déterminées ;

détecter (312) qu'un ou plusieurs sous-intervalles sont anormaux par rapport à une valeur attendue en effectuant une analyse statistique sur la valeur d'entropie mise à l'échelle pour chaque sous-intervalle ; et

publier (314) dans une base de données de rapports au moins un rapport indiquant les sous-intervalles anormaux détectés.

**12.** Dispositif de stockage lisible par ordinateur (1004) selon la revendication 11, dans lequel l'analyse statistique comprend une analyse de moyenne et/ou une analyse d'écart-type.

**13.** Dispositif de stockage lisible par ordinateur (1004) selon la revendication 11, dans lequel les sous-intervalles anormaux détectés comprennent :

- une augmentation et/ou une diminution de l'entropie au cours des sous-intervalles,
- une variation opérationnelle du procédé industriel, ou
- une ou plusieurs de leurs valeurs individuelles qui changent de plage.

**14.** Dispositif de stockage lisible par ordinateur (1004) selon la revendication 11, dans lequel le nombre prédéterminé de valeurs de données individuelles est suffisamment grand pour fournir des calculs d'entropie significatifs et suffisamment petit pour déclencher des anomalies dans un délai raisonnable, et dans lequel la pluralité de sous-intervalles comprend un nombre de sous-intervalles suffisamment grand pour résoudre de légères variations de modèles dans les données chronologiques et suffisamment petit pour qu'un regroupement se produise lorsqu'une pluralité de valeurs de données chronologiques correspondent au même sous-intervalle.

# FIG. 1

# FIG. 2

EP 3 729 343 B1

```
                          REPORTING
                           SERVICE
                             104
```

| THIRD-PARTY APPLICATION REPORTING SERVICE 206 | BUILT-IN REPORTING SERVICE 208 | APPLICATION-SPECIFIC REPORTING SERVICE 210 | HMI 212 |

# FIG. 3

300

104

```
                    ┌──────────┐
                    │  START   │
                    └──────────┘
                         │
                         ▼
        ┌────────────────────────────────────┐
        │          RECEIVE DATA              │
        │              302                   │
        └────────────────────────────────────┘
                         │
                         ▼
        ┌────────────────────────────────────┐
        │   APPORTION DATA INTO SUB-INTERVALS│
        │              304                   │
        └────────────────────────────────────┘
                         │
                         ▼
        ┌────────────────────────────────────┐
        │ DETERMINE MINIMUM AND MAXIMUM      │
        │ VALUES WITHIN EACH SUB-INTERVAL    │
        │              306                   │
        └────────────────────────────────────┘
                         │
                         ▼
        ┌────────────────────────────────────┐
        │ EXECUTE ENTROPY CALCULATION FOR    │
        │       EACH SUB-INTERVAL            │
        │              308                   │
        └────────────────────────────────────┘
                         │
                         ▼
        ┌────────────────────────────────────┐
        │ SCALE ENTROPY VALUE FOR EACH       │
        │         SUB-INTERVAL               │
        │              310                   │
        └────────────────────────────────────┘
                         │
                         ▼
        ┌────────────────────────────────────┐
        │       STATISTICAL ANALYSIS         │
        │              312                   │
        └────────────────────────────────────┘
                         │
                         ▼
              N    ╱ ANOMALY ╲
         ◄─────────╲ DETECTED? ╱
                    ╲        ╱
                         │ Y
                         ▼
        ┌────────────────────────────────────┐
        │    GENERATE AND PUBLISH REPORT     │
        │              314                   │
        └────────────────────────────────────┘
```

# FIG. 4A

FIG. 4B

FIG. 4C

# FIG. 5

Supervisor_IN_0.Memory_Usage has higher variation than usual

posted 2 days ago                    MORE ⌄

# FIG. 6

0DataRetrieval.ProcessValueRepository. GetValue has higher variation than usual

60K

40K

20K

0K

AM  :40   :45   :50   :55   8   :05   :10   :15   :20   :25   :30   :35

602

posted 1 day ago

MORE

# FIG. 7

Test10mstom has higher variation than usual

posted 4 hours ago

MORE ⌄

# FIG. 8

**Mongo_IN_0.Network_Out has higher variation than usual**

213333333.33333334B

210000000.00000000B

206666666.66666666B

203333333.33333334B

200000000.00000000B

802

# FIG. 9

Tentropy4 has lower variation than usual

1.0K

0.8K

0.6K

902

0.4K

0.2K

0.0K

55:00                    :0                    :5                    :10

posted 2 days ago                                        MORE ⌄

# FIG. 10

EP 3 729 343 B1

# FIG. 11

1100

118 1102

USER
DEVICES

101

OPERATIONAL
HISTORIAN
DEVICE

106

103

COMPUTING
DEVICE

1110

1108

PROCESS
CONTROLLER

1106

1104-A

1104-B

1103

PROCESS
FLUID

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015205690 A1
- WO 2017055073 A1
- US 270898